Europäisches Patentamt

European Patent Office

Office européen des brevets

(11) Publication number: **0 520 676 A2**

# EUROPEAN PATENT APPLICATION

(21) Application number: **92305540.4**

(22) Date of filing: **17.06.92**

(51) Int. Cl.⁵: **G06F 11/10**

(30) Priority: **28.06.91 US 722937**

(43) Date of publication of application:
**30.12.92 Bulletin 92/53**

(84) Designated Contracting States:
**DE FR GB IT**

(71) Applicant: **SGS-THOMSON MICROELECTRONICS, INC.**
**1310 Electronics Drive**
**Carrollton Texas 75006(US)**

(72) Inventor: **Raasch, Randy Wayne**
**7823 E. Via De La Entrada**
**Scottsdale, Arizona 85258(US)**

(74) Representative: **Palmer, Roger et al**
**PAGE, WHITE & FARRER 54 Doughty Street**
**London WC1N 2LS(GB)**

(54) **Memory subsystem with error correction.**

(57) A memory subsystem is provided which uses memory devices having known bad bits. In order to prevent memory storage errors from occurring in the subsystem, error detection and correction circuitry is also provided. The error detection and correction circuitry is wholly contained within the memory subsystem, and is not visible beyond its boundaries. The error detection and correction circuitry can correct data stored in the array even when one of the bits within the array is permanently nonfunctional. Therefore, although data is incorrectly stored into and read from the array, these errors are corrected, and only accurate data passes beyond the boundaries of the memory subsystem.

FIG. 2

EP 0 520 676 A2

The present invention relates generally to digital computer systems, and more specifically to memory subsystems suitable for use with digital computers.

Memory subsystems are an integral part of electronic digital computer systems. The cost of memory has dropped sufficiently so that relatively inexpensive personal computer systems can be configured to contain large amounts of memory relative to what was typically available only a few years ago. Memory expansion subsystems are typically available as plug in cards, or modules, which may be placed into a personal computer or workstation in order to provide extra memory.

In order to provide error detection for such memory subsystems, the most common configuration is to provide a parity bit for each byte (8 bits) of memory. Thus, for a memory card configured as a 16 bit memory, 2 parity bits are provided for each 16 bit word. Memory costs have dropped significantly, and continue to decrease, but the cost of the memory chips is still an important factor in the overall cost of the subsystem. This is especially true with large memory expansion cards, which often provide 4 or more megabytes of memory.

More sophisticated error detection and correction schemes, such as the use of error correcting codes capable of correcting single bit errors in data, are not generally provided for small computer system memories. This is in large part due to the additional cost of the error correction system and the price sensitive nature of such subsystems. In addition, semiconductor memory devices are reliable enough that errors occur only relatively infrequently.

Since semiconductor memories for use in memory subsystems must be 100 percent functional, devices which fail final testing are scrapped. In general, there is no way to rehabilitate these devices, and they are simply thrown away. The cost of manufacturing the nonfunctional devices is, and they actuality, reflected in the purchase price of 100 percent functional devices.

It would be desirable to provide a memory subsystem which can be manufactured economically compared to currently available subsystems, and which provides improved operation thereover.

Therefore, according to the present invention, a memory subsystem is provided which uses memory devices having known bad bits. In order to prevent memory storage errors from occurring in the subsystem, error detection and correction circuitry is also provided. The error detection and correction circuitry is wholly contained within the memory subsystem, and is not visible beyond its boundaries. The error detection and correction circuitry can correct data stored in the array even when one of the bits within the array is permanently nonfunctional. Therefore, although data is incorrectly stored into and read from the array, these errors are corrected, and only accurate data passes beyond the boundaries of the memory subsystem.

The novel features believed characteristic of the invention are set forth in the appended claims. The invention itself however, as well as a preferred mode of use, and further objects and advantages thereof, will best be understood by reference to the following detailed description of an illustrative embodiment when read in conjunction with the accompanying drawings, wherein:

Figure 1 is a high level block diagram of a computer system which can incorporate the present invention;

Figure 2 is a block diagram of a memory subsystem according to the present invention; and

Figure 3 is a chart illustrating the logical layout of a memory array for use with the present invention.

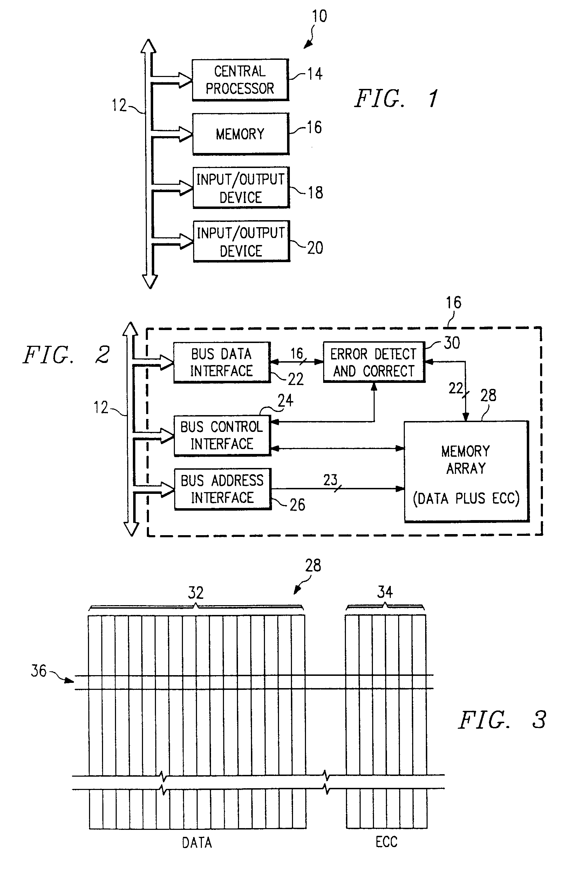

Referring to Figure 1, a computer system 10 generally is designated by reference number 10. Computer system includes a number of elements connected to a common data and address bus 12. These elements include a central processor 14, at least one memory subsystem 16, and several input/output devices 18, 20. These are connected, to and communicate with each other through, the bus 12 as is well known in the art.

Referring to Figure 2, a block diagram illustrates a preferred memory subsystem 16 according to the present invention. Although the present invention has general application, it will be described in a preferred embodiment as a type suitable for inclusion in a modern microcomputer system. The subsystem to be described is an 8 megabyte memory divided into 4 megawords each having 16 bits.

In the memory subsystem 16, data is communicated to and from the bus 12 through bus data interface circuit 22. Bus control interface circuit 24 is used to provide bidirectional transfer of control signals needed by the subsystem 16. Bus address interface 26 decodes addresses made available over the bus 12, and, if they are within the addressing range of the memory subsystem 16, applies them to a memory array 28. Since memory array 28 contains 8 megabytes of data, 23 address lines are required to address each byte.

Data being written to the memory array 28, connects from bus interface 22 through 16 data lines to error detect and correct circuitry 30. Circuitry 30 generates error correction bits as known in the art, and applies the data bits plus error correction bits to the memory array 28. As known in the art, the use of 6 error correction bits will allow all single bit errors which occur in data read from the memory array **28** to be corrected. Therefore, 6 error correcting bits are used, so that the error detect and correction circuitry **30** reads and writes 22 bits to the memory array **28**. Commercially available devices can be used to perform the error detecting correction circuitry **30** functions, and one example of such a suitable device is the MB01462 device available from Fujitsu.

According to the present invention, integrated circuit memory chips which are known to have hard bit failures are used to populate the memory array **28**. Hard bit failures for DRAM and SRAM memory devices are generally of the stuck-at-0 or stuck-at-1 type. A completed integrated circuit memory chip which has 1 or more hard bit failures is generally scrapped as nonfunctional, even though most of the bits actually function properly. This is because in previous memory systems, all bits must be functional to ensure proper operation of the system. With the present invention, these devices which were previously considered nonfunctional are used to provide a fully functional memory subsystem at a relatively low cost.

As described above, the error detect and correct circuitry **30** can actually correct for 1 bit errors in data read from the memory array. Therefore, it is important that, for each word which is addressable within the array **28**, no more than 1 hard bit error occurs. This consideration is illustrated in **Figure 3**, in which the memory array **28** is represented logically as 16 columns of data **32**. In addition to the data bits **32**, 6 error correcting bits **34** are also contained within the array.

**Figure 3** shows a single addressable entry **36** or row, of the array **28** which contains 22 data bits. For the memory array **28** which uses 23 address bits, there are $2^{23}$ such entries **36**. For each of these entries **36**, there can be no more than 1 hard bit failure among the 22 bits stored in the array. So long as every entry within the array has no more than 1 hard bit failure, every entry can be completely corrected by the error detect and correct circuitry **30** to provide a fully functional memory subsystem to the remainder of the computer system **10**.

In one possible configuration, each bit position of the data bits **32** is represented by a single memory device. For the 4 megaword memory described above, 4 megabit X 1 memory chips can be used for each bit position, with 22 such memory chips being required. Even if each memory chip used in the array **28** has 1,000 bad bits, there are only approximately 22,000 bad bits in the array. Since there are over 4,000,000 separately addressed entries, the proportion of addressable words **36** which will have one of the bad bits is on the order 1/2 of 1 percent. Assuming that the bad bits are more or less randomly located on the memory chips, the chances that any one entry **36** will have more than 1 bad bit are fairly low. If desired, each of the chips used in the array can be tested prior to use in order to map out the location of bad bits and ensure that no entries have more than 1. Alternatively chips can simply be placed into the array and the entire array tested. Occasionally, some entries will have 2 or more bad bits, and the chips in these arrays can be removed and replaced with other chips. On a statistical basis, most of the time the memory array **28** will be fully functional with the addition of the error detection and correct circuitry **30**.

Since most of the entries within the array **28** are fully functional, the described technique, which uses known nonfunctional parts, actually results in a memory subsystem which is better protected from errors than standard subsystems which use simple parity checks to indicate data errors. More than 99 percent of the entries in the array **28** will typically have no hard bit failures, and the error detection and correct circuitry will allow proper functioning of the memory even if a soft bit failure occurs during normal operation of the system. Thus, unlike typical conventional memory subsystems for microcomputers, more than 99 percent of the memory array is protected from soft errors by the error correction circuitry. The remaining small fraction of the array, already having a hard bit failure within each entry, is no more or less prone to failure than typical memory subsystems which start with fully functional chips and do not use error correction circuitry.

The memory subsystem shown in **Figure 2** is somewhat more complex than a typical 16 bit memory subsystem for a microcomputer. This is because of the additional cost and complexity of the error detect and correction circuitry **30** and the requirement for extra error correction bits **34**. Since a typical microcomputer subsystem uses 1 parity bit for each 8 data bits, the subsystem described above requires an extra 4 bit positions memory array **28**. However, the overall cost for the memory subsystem described above can be cost competitive with available prior art systems. With a conventional memory subsystem, the cost of 18 high density memory chips is a major factor in the overall cost of the device. With the system described above, the nonfunctional memory chips are obtainable at a nominal cost, with the extra expense of the error detect and correction circuitry **30** contributing to the overall cost of the device. In both cases, the interface circuitry to the system bus is the same. Therefore, if a single 16 bit error detection and correction circuit **30** can be obtained for significantly less cost than 18 high density chips, the overall system can be manufactured at a lower cost than prior art subsystems. In addition, even though memory chips are used which are defined to be partially nonfunctional, a higher level of error correction is provided than is found with prior art devices.

As described above, all entries within the array **28** which have single bit errors can be corrected by the error detect and correction circuitry. As is known in the art, the error detect circuitry **30** can also correct 2 bit errors in some cases. If one of the bit errors in an entry is one of the stuck-at-0 or stuck-at-1 entries, the error detection circuitry can rewrite data into the accessed entry, and determine the location of the soft bit error. This is a function available on commercially available EDAC devices such as are available from National Semiconductor.

As will be appreciated by those skilled in the art, the subsystem described above, which uses known partially functional memory devices in a memory array with error correcting circuitry, provides a memory subsystem which is superior to a subsystem which uses fully functional devices but no error correction. Since the cost of partially inoperative memory devices is relatively low, such a subsystem can be manufactured at prices which are competitive with those which do not include the relatively expensive error detection and correct circuitry **30**. Since the function of the error detect and correction circuitry **30** is wholly contained on the subsystem, the memory subsystem **16** appears to the remainder of the computer system **10** exactly as a fully functional subsystem already known in the prior art.

While the invention has been particularly shown and described with reference to a preferred embodiment, it will be understood by those skilled in the art that various changes in form and detail may be made therein without departing from the spirit and scope of the invention.

**Claims**

1. A memory subsystem for a computer system, comprising:

   a memory array having a plurality of non-functional bits, said array divided into a plurality of rows;

   address and control interface circuitry connected to said array for interfacing with a computer system bus;

   data interface circuitry for interfacing with the computer system bus; and

   error correcting circuitry connected to said data interface circuitry and to said memory array for correcting erroneous data read from said array before forwarding such data to said data interface circuitry, wherein error detection and correction information is stored into said array by said error correcting circuitry when data from said data interface circuitry is written into said array, wherein operation of said error correcting circuitry is not visible to parts of the computer system other than the memory subsystem.

2. The memory subsystem of Claim 1, wherein said error correcting circuitry will correct for single bit errors in data read from said array, and wherein at most one bit in each row of said array is non-functional.

3. The memory subsystem of Claim 1, wherein the non-functional bits are each stuck at a value of 0 or 1.

4. A method for providing data values from a memory subsystem, comprising the steps of:

   providing a memory array having a plurality of non-functional bits;

   addressing entries in the array for reading or writing;

   when data is written into an addressed entry, storing a plurality of error correcting bits in the array in addition to the data; and

   when data is read from an addressed entry, correcting errors identified by the corresponding error correcting bits before transmitting the data off of the memory subsystem, wherein no indication of such correction is transmitted off of the memory subsystem.

5. The method of Claim 4, wherein the entries contain 16 bits, and there are 6 error correcting bits corresponding to each entry.

6. The method of Claim 4, wherein there is at most one non-functional bit in each entry of the array.

7. A memory subsystem for a computer system, comprising:

   a memory array having a plurality of entries, and further having a plurality of non-functional bits which are distributed so that each entry has no more than one non-functional bit;

means for addressing said memory array;

means for providing to be written into said array; and

error correcting means for storing error correction data into said array, and for using such error correction data to correct errors in data read from said array.

*10*

CENTRAL
PROCESSOR ~14

*FIG. 1*

12

MEMORY ~16

INPUT/OUTPUT
DEVICE ~18

INPUT/OUTPUT
DEVICE ~20

16

*FIG. 2*

BUS DATA
INTERFACE
22

16
22

ERROR DETECT
AND CORRECT ~30

28

12

BUS CONTROL
INTERFACE
24

22

MEMORY
ARRAY

(DATA PLUS ECC)

BUS ADDRESS
INTERFACE
26

23

28

32

34

36

*FIG. 3*

DATA

ECC